# EUROPEAN PATENT APPLICATION

(11) **EP 1 253 249 A2**
(43) Date of publication of application: **30.10.2002**
(21) Application number: 02253002.6
(22) Date of filing: 26.04.2002
(51) Int. Cl.: E01H 1/08

(54) **Blower with interchangeable fixed and flexible tubes**

(30) Priority: 27.04.2001 US 844197
(71) Applicant: Black & Decker Inc., Newark Delaware 19711 (US)
(72) Inventor: Marshall, James D., Mallorytown, Ontario K0E 1R0 (CA); Milligan, Michael A., Gananoque, Ontario K7G 2V4 (CA); Mooney, Patrick W., Brockville, Ontario K6V 5T2 (CA)
(74) Representative: Bell, Ian Stephen

(57) **Abstract**

A portable blower device with a housing, a power source, a fan structure and a set of discharge tubes. The fan structure is coupled to a movable output member of the power source and produces an air flow that enters into the housing from an inlet and discharges therefrom via an outlet in response to movement of the output member. Each discharge tube includes a coupling portion that is configured to permit the discharge tube to be releasably engaged to the outlet. The set of discharge tubes include a rigid discharge tube that is configured such that it does not significantly deflect when its coupling portion is engaged to the outlet and the remaining portion of the rigid discharge tube extends generally horizontally outwardly from the outlet in an unsupported manner. The set of discharge tubes also includes a flexible discharge tube that is configured such that at least a portion of it does significantly deflect when its coupling portion is engaged to the outlet and the remaining portion of the flexible discharge tube extends generally horizontally outwardly from the outlet in an unsupported manner.

## Description

The present invention generally relates to debris blowers and more particularly to a debris blower having fixed and flexible discharge tubes which may be selectively coupled to the outlet of a blower housing.

Debris blowers are known in which an impeller or a fan driven by a motor creates an air stream which is directed into a duct. The air stream discharged from the open end of the duct is employed to blow debris from walkways, driveways and lawns, etc. Typically, hand-held debris blowers are provided with a rigid tube assembly that requires the operator to move the entire debris blower to change the orientation and position of the air that is discharged therefrom. When operating these debris blowers for "sweeping" operations in which the discharged air is moved in a zigzag manner across a work surface, operator fatigue is relatively common due to the amount by which the debris blower must be moved and since the operator is typically required to support the entire weight of the debris blower with their arm and shoulder.

One solution to this problem has been the provision of a back-packed debris blower wherein the blower is strapped to the back of the operator and a rigid discharge wand is coupled to the blower via an intermediate flexible hose that is fixedly coupled to the outlet of the blower. Back-packed debris blowers, however, are typically less convenient to use and tend to be difficult for some operators to utilize, particularly those with limited mobility in the portions of their bodies which impairs their ability to comfortably strap the blower to or support the blower with their back. Furthermore, as substantial inefficiencies are typically associated with the use of the flexible tube (as compared with a rigid tube that is aligned along the longitudinal axis of the blower outlet), back-packed debris blowers tend to be less efficient than similarly sized hand-held portable debris blowers having rigid tube assemblies. Accordingly, the back-packed debris blower may need to be sized relatively larger than a hand-held portable debris blower to accomplish the same tasks.

It is therefore an object of the present invention to provide a debris blower having a plurality of discharge tubes including a rigid discharge tube and a flexible discharge tube which can be selectively coupled to the outlet of the blower.

In one preferred form, the present invention provides a portable blower device with a housing, a power source, a fan structure and a set of discharge tubes. The fan structure is coupled to a movable output member of the power source and produces an air flow that enters into the housing from an inlet and discharges therefrom via an outlet in response to movement of the output member. Each discharge tube includes a coupling portion that is configured to permit the discharge tube to be releasably engaged to the outlet. The set of discharge tubes include a rigid discharge tube that is configured such that it does not significantly deflect when its coupling portion is engaged to the outlet and the remaining portion of the rigid discharge tube extends generally horizontally outwardly from the outlet in an unsupported manner. The set of discharge tubes also includes a flexible discharge tube that is configured such that at least a portion of it does significantly deflect when its coupling portion is engaged to the outlet and the remaining portion of the flexible discharge tube extends generally horizontally outwardly from the outlet in an unsupported manner.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

Additional advantages and features of the present invention will become apparent from the subsequent description and the appended claims, taken in conjunction with the accompanying drawings, wherein:
Figure 1 is a side view of a blower constructed in accordance with the teachings of the present invention;
Figure 2 is a sectional view of the blower of Figure 1 taken along its longitudinal axis;
Figure 3 is a perspective view of a portion of the blower of Figure 1, illustrating the flexible discharge tube in greater detail;
Figure 4 is a partially broken away side view of the flexible discharge tube;
Figure 5 is an enlarged view of a portion of Figure 4;
Figure 6 is a partially broken away bottom view of the flexible discharge tube;
Figure 7 is an exploded perspective view illustrating the coupling of the flexible discharge tube and the secondary discharge tube;
Figure 8 is a partial sectional view taken along the longitudinal axis of the flexible discharge tube;
Figure 9 is an end view of the portion of the flexible discharge tube illustrated in Figure 8;
Figure 10 is a view similar to that of Figure 8 but illustrating the position of the protrusion on the secondary discharge tube as the secondary discharge tube is engaged to the flexible discharge tube;
Figure 11 is a perspective view of the blower of Figure 1 as operated with the rigid discharge tube coupled to the outlet in the housing; and
Figure 12 is a perspective view of the blower of Figure 1 as operated with the flexible discharge tube coupled to the outlet in the housing.

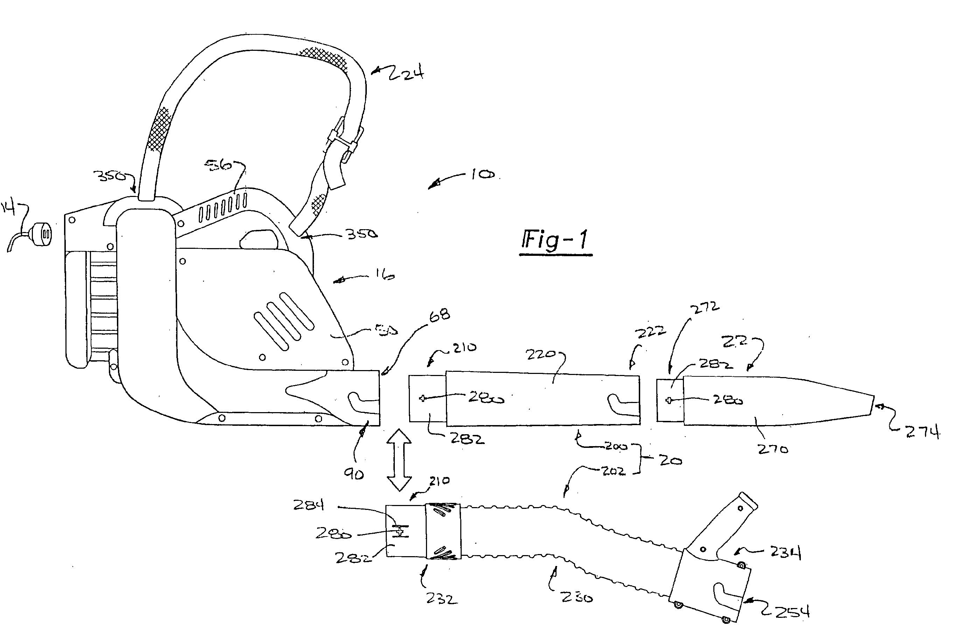

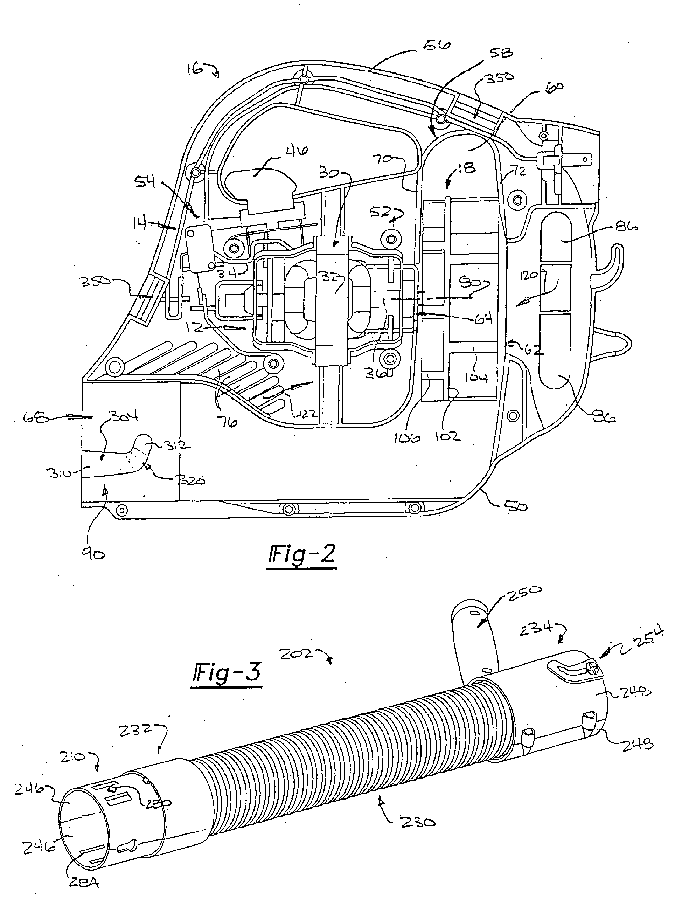

With reference to Figures 1 and 2 of the drawings, a blower constructed in accordance with the teachings of the present invention is generally indicated by reference numeral 10. The blower 10 is shown to include a power source 12, a switch assembly 14 for selectively controlling the power source, a housing 16, a fan structure, such as an impeller 18, a set of discharge tubes 20, a secondary discharge tube 22 and a strap 24. In the particular embodiment illustrated, the power source 12 is illustrated to include a motor assembly 30 having an electric motor 32 with a pair of terminals 34 and an output shaft 36. The motor assembly 30 and switch assembly 14 are conventional in their construction and operation and need not be discussed in significant detail. Briefly, the switch assembly 14 is coupled to a source of electric power (e.g., via a power cord 40) and via the terminals 34, selectively provides the motor 32 with electricity in a predetermined manner that is related to the amount by which a trigger button 46 on the switch assembly 14 is depressed. In the example illustrated, the switch assembly 14 includes a toggle switch, but as those skilled in the art will readily understand, any appropriate switch may be used.

The housing 16 is illustrated to include a pair of housing shells 50 that collectively define a motor mounting portion 52, a switch mounting portion 54, a handle 56 and a volute 58 having an impeller cavity 60, a primary inlet 62, a secondary inlet 64 and an outlet 68. The motor and switch mounting portions 52 and 54 are conventional in their construction and operation, being employed to fixedly couple the motor assembly 30 and the switch assembly 14, respectively, within the housing 16. When the motor assembly 30 is coupled to the housing 16 by the motor mounting portion 52, the distal end of the output shaft 36 extends rearwardly into the impeller cavity 60.

The impeller cavity 60 extends radially around the output shaft 36 and is substantially enveloped on its forward and rearward sides by a pair of annular endwalls 70 and 72, respectively, into which the secondary and primary inlets 62 and 64, respectively, are formed. A plurality of vent apertures 76 that are skewed to the rotary axis 80 of the output shaft 36 are formed through the housing 16 forwardly of the endwall 70. A plurality of circumferentially extending inlet apertures 86 are spaced around the housing 16 rearwardly of the endwall 72. The circumference of the portion of the housing 16 into which the inlet apertures 86 are formed is illustrated to be larger than the diameter of the primary inlet 62. The outlet 68 intersects the impeller cavity 60 tangent to the outer diameter of the impeller cavity 60 in a manner that is conventionally known. However, the outlet 68 turns forwardly after this intersection and extends along an axis that is offset both vertically and horizontally from the rotary axis 80 of the output shaft 36. The outlet 68 terminates at a coupling portion 90 that will be discussed in greater detail, below.

The impeller 18 is illustrated to be coupled for rotation with the output shaft 36 and include a flange member 102, a set of first impeller blades 104 and a set of second impeller blades 106. The flange member 102 extends radially outwardly in a continuous manner to thereby completely segregate the sets of first and second impeller blades 104 and 106 from one another.

During the operation of the blower 10, the impeller 18 rotates within the impeller cavity 60. Rotation of the set of first impeller blades 104 imparts momentum to the air that is disposed between each adjacent pair of first impeller blades 104, slinging the air radially outwardly toward the outlet 68. The air exiting the outlet 68 as a result of the momentum imparted by the set of first impeller blades 104 creates a negative pressure differential that generates a primary air flow 120 that enters the housing 16 through the inlet apertures 86 and is directed into the set of first impeller blades 104 by the primary inlet 62 in a direction generally parallel the rotary axis 80.

Similarly, rotation of the set of second impeller blades 106 imparts momentum to the air that is disposed between each adjacent pair of second impeller blades 106, slinging the air radially outwardly toward the outlet 68. The air exiting the outlet 68 as a result of the momentum imparted by the set of second impeller blades 106 creates a negative pressure differential that generates a secondary air flow 122 that enters the housing 16 through the vent apertures 76. The housing 16 is constructed such that the motor 32 rejects heat to the secondary air flow 122 before it travels through the secondary inlet 64. The secondary inlet 64 directs the secondary flow 122 into the set of second impeller blades 106 in a direction generally parallel the rotary axis 80 and opposite the primary air flow 120.

The primary and secondary air flows 120 and 122 combine in the outlet 68 and are discharged through the coupling portion 90. In the example provided, the height of the first impeller blades 104 is substantially larger than that of the second impeller blades 106 and as such, the mass flow rate of the primary air flow 120 will be substantially larger than the mass flow rate of the secondary air flow 122. As the flange member 102 is continuous, the primary and secondary flows 120 and 122 cannot travel in an axial direction beyond the flange member 102 until they have been slung radially outwardly of the impeller 18.

The set of discharge tubes 20 is illustrated to include a rigid discharge tube 200 and a flexible discharge tube 202, both of which are illustrated to have a coupling portion 210 that is configured to releasably engage the coupling portion 90 of the outlet 68. The rigid discharge tube 200 is a generally hollow cylindrical structure that is preferably unitarily formed from a plastic material. The rigid discharge tube 200 includes a body portion 220, to which the coupling portion 210 is fixedly coupled to its proximal end and a second coupling portion 222 is fixedly coupled to its distal end. The rigid discharge tube 200 is configured such that it does not significantly deflect when its coupling portion 210 is engaged to the coupling portion 90 of the outlet 68 and the remaining portion of the rigid discharge tube 200 extends generally horizontally outwardly from the outlet 68 in an unsupported manner.

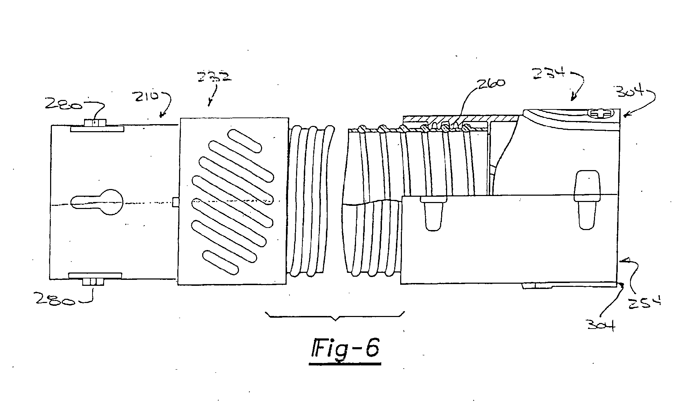

In Figures 1 and 3 through 6, the flexible discharge tube 202 is configured such that at least a portion of it does significantly deflect when its coupling portion 210 is engaged to the coupling portion 90 of the outlet 68 and the remaining portion of the flexible discharge tube 202 extends generally horizontally outwardly from the outlet 68 in an unsupported manner. In the particular embodiment illustrated, the flexible discharge tube 202 is illustrated to include a flexible hose assembly 230, a first end structure 232, into which the coupling portion 210 is integrated, and a second end structure 234. As shown, the flexible hose assembly 230 includes a hose portion 240 and a reinforcing member 242 that is wrapped around the hose portion 240 in a helical manner to provide both guard against wear on the hose portion 240 and to restrict the expansion of the hose portion 240 should the flow of air out the secondary discharge tube 22 be restricted.

The first end structure 232 is a rigid structure that is formed by a pair of molded plastic shells 246 that are configured to fit around and fixedly engage a proximal end of the flexible hose assembly 230. The second end structure 234 is also a rigid structure that is formed by a pair of molded plastic shells 248 that are configured to fit around and fixedly engage a distal end of the flexible hose assembly 230. The second end structure 234 includes a handle 250 that is configured to be manipulated by an operator to permit the distal end of the flexible hose assembly 230 to be positioned and oriented in a desired manner relative to the housing 16. The second end structure 234 also includes a second coupling portion 254 that is identical in configuration to the second coupling portion 222 on the distal end of the rigid discharge tube 200. In the particular example provided, each of the first and second end structures 232 and 234 is shown to include a helical engagement member 260 that is configured to threadably engage the reinforcing member 242. Those skilled in the art will understand, however, that other attachment means, including adhesives, may also or alternatively be employed.

Returning to Figure 1, the secondary discharge tube 22 is a generally hollow cylindrical structure that is preferably unitarily formed from a plastic material. The secondary discharge tube 22 includes a body portion 270, to which a coupling portion 272 is fixedly coupled to its proximal end and a discharge outlet 274 is formed in its distal end. The coupling portion 272 is configured to matingly engage the second coupling portions 222 and 254 in the rigid and flexible discharge tubes 200 and 202, respectively.

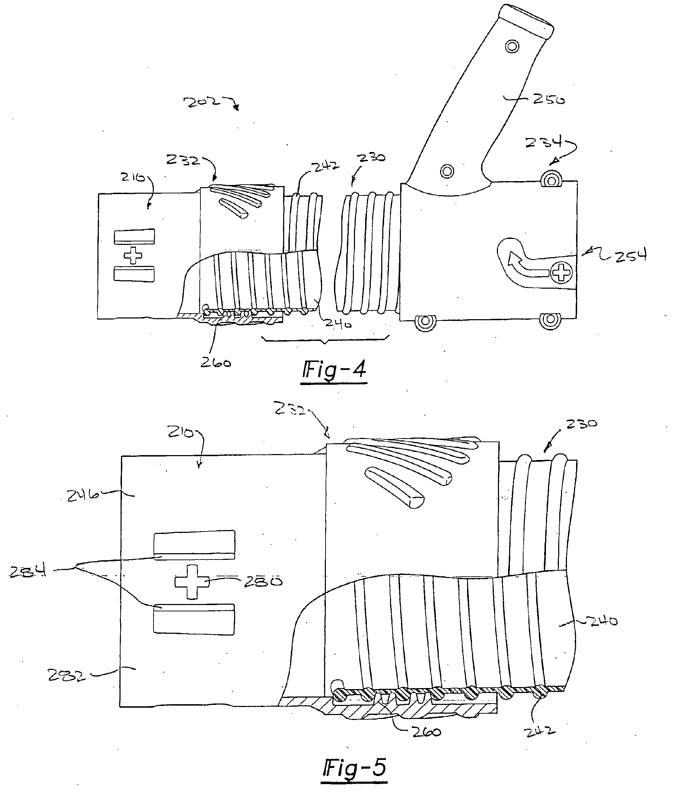

The coupling portions 210 and 272 on the rigid discharge tube 200 and the secondary discharge tube 22 include a pair of protrusions 280 that extends outwardly from the outer surface of a generally cylindrical end body 282 and which are spaced apart from one another by 180°. The protrusions 280 are illustrated to have a cross-shape but may be shaped in any desired manner. With additional reference to Figures 3 and 5, the coupling portion 210 incorporated into the first end structure 232 is generally similar, but also includes a pair of axially extending slots 284 on the opposite sides of each protrusion 280 which permit the rather rigid shells 246 to deflect somewhat to facilitate the coupling of the flexible discharge tube 202 to the outlet 68.

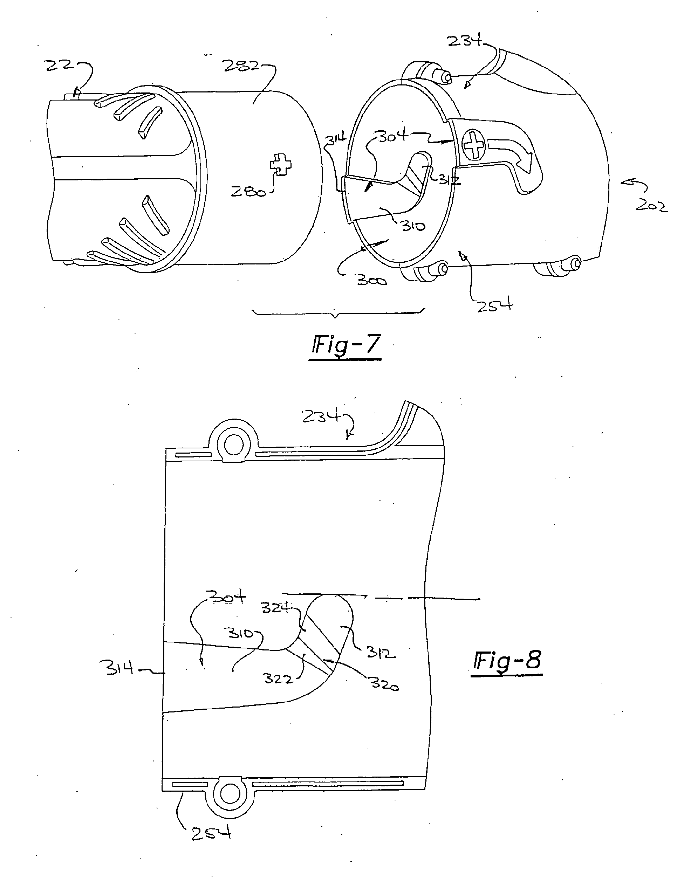

As the coupling portions 90, 222 and 254 are identical in their configuration and operation, only the coupling portion 254 will be discussed in significant detail. With reference to Figures 7 through 10, the coupling portion 254 is shown to include a cylindrical aperture 300, which is sized to engage the cylindrical end body 282 of the secondary discharge tube 22, and a pair of L-shaped channels 304 which are spaced 180° apart from one another and configured to receive the protrusions 280 from the coupling portion 272. Each of the L-shaped channels 304 includes a first portion 310, which is arranged generally parallel a longitudinal axis of the second end structure 234, and a second portion 312, which is coupled to an end of the first portion 310 and extends circumferentially around the second end structure 234 away from the first portion 310. The first portion 310 is shown to taper inwardly from the end 314 of the second end structure 234 to the second portion 312 to thereby facilitate the insertion of the protrusions 280 into the L-shaped channels 304.

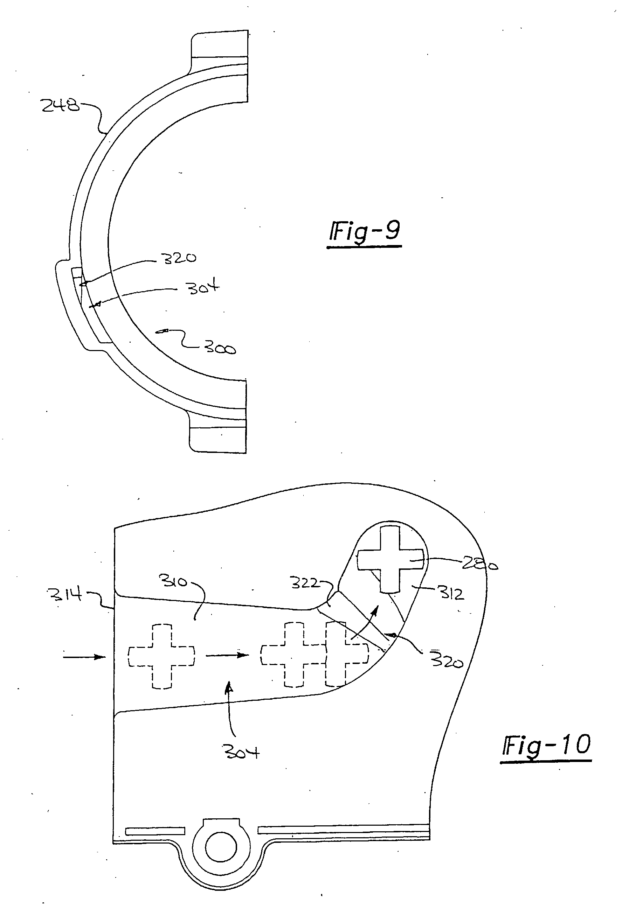

A ramp 320 is formed in the L-shaped channel 304 and includes first and second tapered surfaces 322 and 324, respectively. The ramp 320 is positioned in the L-shaped channel 304 so as to resist the movement of the protrusion 280 out of the second portion 312 to maintain the flexible discharge tube 202 and the secondary discharge tube 22 in a coupled relation. Preferably, the second tapered surface 324 extends into the second portion 312 of the L-shaped channel 304 to a degree wherein the protrusion 280 is partially engaged thereto as shown in solid line in Figure 10. Configuration of the ramp 320 in this manner is advantageous in that the interference between the ramp 320 and the protrusion 280 generates a force that operates to clamp the flexible discharge tube 202 and the secondary discharge tube 22 together.

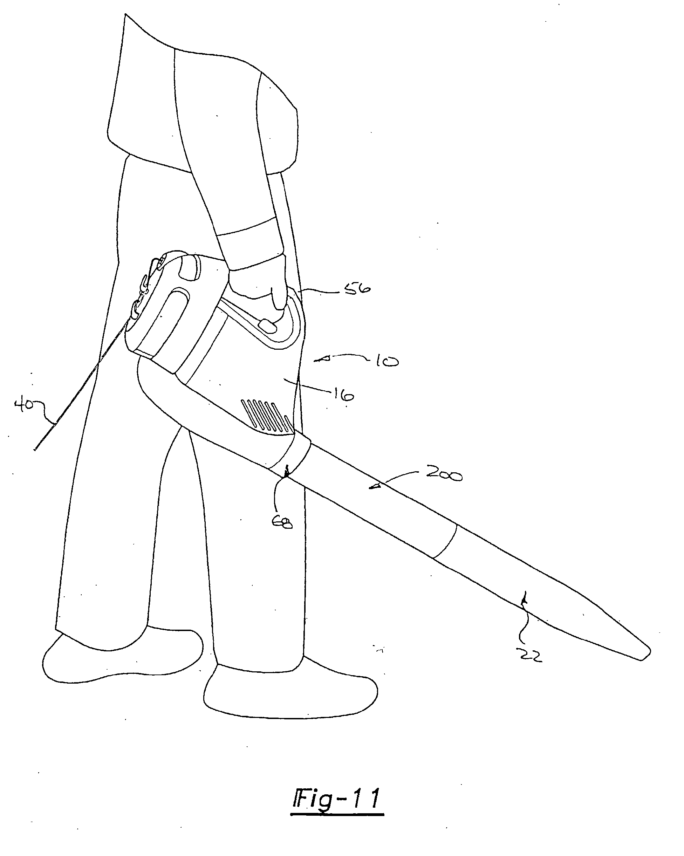

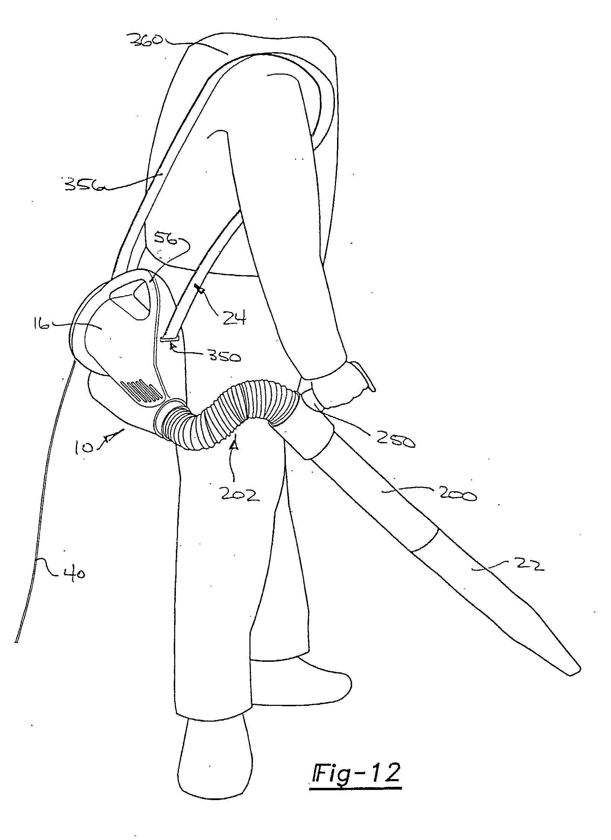

In Figures 1 and 2, the shoulder strap 24 is illustrated to be releasably coupled at its opposite ends to a pair of buckle clips 350 that are formed in the housing 16. As shown in Figure 11, the shoulder strap 24 may be removed from the housing 16 so as not to inhibit the manipulation of the blower 10 when the operator is employing the handle 56. As shown in Figure 12, attachment of the shoulder strap 24 to the housing 16 permits a loop 356 to be formed which can then be draped over the shoulder 360 of the operator to thereby support the weight of the housing 16, the power source 12 and the fan structure 18. In the particular example illustrated, the rigid discharge tube 200 is coupled to the distal end of the flexible discharge tube 202. It will be understood, however, that the secondary discharge tube 22 may be coupled directly to the distal end of the flexible discharge tube 202 or that either of the rigid and flexible discharge tubes 200 and 202 may be employed without the use of the secondary discharge tube 22. Furthermore, those skilled in the art will appreciate that the secondary discharge tube 22 may also be incorporated directly into one or both of the rigid and flexible discharge tubes 200 and 202.

While the invention has been described in the specification and illustrated in the drawings with reference to a preferred embodiment, it will be understood by those skilled in the art that various changes may be made and equivalents may be substituted for elements thereof without departing from the scope of the invention as defined in the claims. In addition, many modifications may be made to adapt a particular situation or material to the teachings of the invention without departing from the essential scope thereof. Therefore, it is intended that the invention not be limited to the particular embodiment illustrated by the drawings and described in the specification as the best mode presently contemplated for carrying out this invention, but that the invention will include any embodiments falling within the foregoing description and the appended claims.

## Claims

1. A portable blower device comprising:
a housing defining at least one inlet and an outlet;
a power source disposed within the housing, the power source having a movable output member;
a fan structure coupled to the output member, the fan structure moving in response to movement of the output member and producing an air flow that enters into the housing from the inlet and discharges out of the housing from the outlet; and
a set of discharge tubes for selectively coupling to the outlet, each of the discharge tubes having a coupling portion that is configured to releasably engage the outlet, the set of discharge tubes including a rigid discharge tube and a flexible discharge tube, the rigid discharge tube being configured such that it does not significantly deflect when its coupling portion is engaged to the outlet and the remaining portion of the rigid discharge tube extends generally horizontally outwardly from the outlet in an unsupported manner, the flexible discharge tube being configured such that at least a portion of it does significantly deflect when its coupling portion is engaged to the outlet and the remaining portion of the flexible discharge tube extends generally horizontally outwardly from the outlet in an unsupported manner, the flexible discharge tube including a gripping structure that is configured to be manipulated by an operator to permit a distal end of the flexible discharge tube to be positioned and oriented in a desired manner relative to the housing.

2. The portable blower device of Claim 1, further comprising a secondary discharge tube for selectively coupling to a distal end of at least one of the rigid and flexible discharge tubes.

3. The portable blower device of Claim 1, wherein the rigid discharge tube is unitarily formed.

4. The portable blower device of Claim 1, wherein the flexible discharge tube includes a flexible hose assembly, a first end structure and a second end structure, the first end structure being coupled to a proximal end of the flexible hose assembly, the coupling portion being integrated into the first end structure, the second end structure being coupled to the distal end of the flexible discharge tube.

5. The portable blower device of Claim 4, wherein the first end structure includes a pair of shell members that are configured to fit around and engage the proximal end of the flexible hose assembly.

6. The portable blower device of Claim 4, wherein the flexible hose assembly includes a hose portion and a reinforcing member, the reinforcing member being wrapped around the hose portion.

7. The portable blower device of Claim 6, wherein the reinforcing member is wrapped in a helical manner.

8. The portable blower device of Claim 7, wherein the first end structure includes a helical engagement member that is configured to threadably engage the reinforcing member.

9. The portable blower device of Claim 7, wherein the second end structure includes a helical engagement member that is configured to threadably engage the reinforcing member.

10. The portable blower device of Claim 4, wherein the second end structure includes first and second shell members that are configured to fit around and engage the proximal end of the flexible hose assembly.

11. The portable blower device of Claim 1, wherein the housing includes a handle portion.

12. The portable blower device of Claim 1, further comprising a shoulder strap that is coupled to the housing, the shoulder strap being configured to be looped over an operator's shoulder to thereby support the weight of the housing, the power source and the fan structure.

13. The portable blower device of Claim 1, wherein the power source is an electric motor.

14. The portable blower device of Claim 1, wherein the fan structure is an impeller that cooperates with the housing to provide a radially-directed flow of air.

15. The portable blower device of Claim 1, wherein one of the coupling portions and the outlet includes an L-shaped channel and the other one of the coupling portions and the outlet includes a protrusion for engaging the L-shaped channel, the L-shaped channel having a first portion that is arranged generally parallel a longitudinal axis of the one of the one of the coupling portions and the outlet and a second portion that is coupled to an end of the first portion and extends circumferentially around a portion of the one of the coupling portions and the outlet away from the first portion.

16. The portable blower device of Claim 16, wherein a ramp is formed into the L-shaped channel, the ramp operatively resisting movement of the protrusion between the first and second portions of the L-shaped channel.

17. A portable blower device comprising:
a housing defining at least one inlet and an outlet;
a fan structure movably supported in the housing and generating an output air flow in response to its movement within the housing;
a discharge tube having a rigid portion and a flexible portion that is removably coupled to the rigid portion, each of the rigid and flexible portions having a coupling portion that is configured to be removably coupled to the outlet;
wherein the portable blower device is operable in a first condition wherein the flexible portion of the discharge tube is engaged to the outlet at a first end and engaged to an end of the rigid portion at a second end to permit fluid communication from the housing through the flexible portion to the rigid portion, and wherein the portable blower device is operable in a second condition wherein the rigid portion of the discharge tube is engaged to the outlet and the flexible portion is not engaged to either one of the outlet and the rigid portion so that the rigid portion is in direct fluid connection with the housing.

18. The portable blower device of Claim 17, further comprising a secondary discharge tube for selectively coupling to a distal end of the rigid and flexible portions of the discharge tubes.

19. The portable blower device of Claim 17, wherein the rigid portion of the discharge tube is unitarily formed.

20. The portable blower device of Claim 17, wherein the flexible portion of the discharge tube includes a flexible hose assembly, a first end structure and a second end structure, the first end structure being coupled to a proximal end of the flexible hose assembly, the coupling portion being integrated into the first end structure, the second end structure being coupled to a distal end of the flexible hose assembly and including a handle that is configured to be manipulated by an operator to permit the distal end of the flexible hose assembly to be positioned and oriented in a desired manner relative to the housing.
